# FASCICULE DE BREVET EUROPEEN

(11) **EP 0 505 258 B1**
(45) Date de publication et mention de la délivrance du brevet: **28.06.1995**
(21) Numéro de dépôt: 92400694.3
(22) Date de dépôt: 16.03.1992
(51) Int. Cl.: G21C 21/02

(54) **Appareil de nettoyage de l'extrémité de la gaine d'un crayon combustible de réacteur nucléaire**
Apparat zur Reinigung von Kernreaktorbrennstabenden
Apparatus for cleaning nuclear reactor fuel rods ends

(30) Priorité: 18.03.1991 FR 9103263
(43) Date de publication de la demande: 23.09.1992
(73) Titulaire: COMMISSARIAT A L'ENERGIE ATOMIQUE, 75015 Paris (FR)
(72) Inventeur: Michel, Alain, F-13100 Aix en Provence (FR); Bernard, Hervé, F-13100 Aix en Provence (FR); Gailliano, Jean-Claude, F-04220 Corbieres (FR)
(74) Mandataire: Poulin, Gérard

(56) Documents cités:
- EP-A- 0 292 716
- EP-A- 0 354 247
- EP-A- 0 370 303

## Description

La présente invention se rapporte au domaine des éléments combustibles de réacteurs nucléaires refroidis à l'eau légère, dans lesquels les assemblages de combustible nucléaire sont constitués par des groupements de plusieurs crayons comportant chacun, empilées dans une gaine tubulaire, un certain nombre de pastilles d'éléments combustibles proprement dits.

Dans la chaîne de fabrication des crayons combustibles, il existe une phase (celle d'engainage des pastilles combustibles) qui pollue par des poussières radioactives inévitables, l'extrémité des crayons.

Cette pollution est à éviter pour deux raisons essentielles :
1°) la gaine doit rester propre à l'extérieur sur toute sa longueur ;
2°) la soudure du bouchon doit s'effectuer dans d'excellentes conditions de propreté.

Le document EP-A-0 370 303 décrit un appareil de nettoyage de l'extérieur de la gaine d'un crayon combustible comportant des moyens de translation/rotation de la gaine, des moyens d'essuyage simulant l'activité manuelle d'essuyage ainsi qu'un poste d'aspersion des gaines à nettoyer.

Les ateliers de fabrication d'éléments combustibles ont besoin d'un dispositif qui trouve sa place dans la chaîne de fabrication et qui permette de nettoyer rapidement l'extrémité, l'intérieur et l'extérieur de la gaine sur quelques millimètres par un essuyage permettant d'éviter les incrustations dans le métal de matières radioactives comme le ferait par exemple une opération de grattage.

La présente invention a précisément pour objet un appareil de nettoyage de l'extrémité de la gaine qui répond de façon très simple aux exigences de la fabrication précédemment rappelées.

Cet appareil de nettoyage de l'extrémité de la gaine d'un crayon combustible de réacteur nucléaire, ledit crayon étant monté de façon à pouvoir se déplacer en translation et/ou en rotation selon/autour de son axe, se caractérise en ce qu'il comprend :
- une pièce cylindrique allongée percée de part en part selon son axe d'un conduit de diamètre variable sur sa longueur s'élargissant aux deux extrémités en forme de chambre ;
- une tige rigide occupant le conduit, terminée à son extrémité avant par une butée cylindrique ayant le diamètre externe de la gaine à nettoyer, prolongée par un embout profilé de dimensions radiales lui permettant de pénétrer dans l'extrémité interne de la gaine, ladite tige rigide formant :
   a) dans la chambre arrière, un piston apte à déplacer l'ensemble de la tige rigide, vers l'avant ou vers l'arrière, sous les effets antagonistes d'un ressort et d'une pression de fluide appliquée depuis l'extérieur de la pièce cylindrique sur la tête du piston, et
   b) dans la chambre avant, un système de préhension d'une bande de tissu tendue et apte à défiler devant la machine entre celle-ci et l'extrémité de la gaine à nettoyer, composé de quatre doigts basculant chacun autour d'un axe et mus par une came en forme de surépaisseur diamétrale située sur la portion de la tige rigide située dans la chambre avant.

Selon l'invention, la tige rigide qui occupe le conduit percé dans l'axe de la pièce cylindrique allongée comporte ainsi deux extrémités dont les fonctions sont différentes.

A l'extrémité arrière, cette tige est élargie aux dimensions d'un piston qui coulisse dans la chambre arrière et dont la position est réglée à chaque instant par action de deux forces antagonistes d'un ressort de rappel d'une part et d'une force due à l'injection d'une pression d'air sur la face avant du piston.

La partie avant de la tige au contraire, est celle qui, dans le cadre du fonctionnement du dispositif de nettoyage objet de l'invention, vient en contact à la fois avec l'extrémité de la gaine du crayon à nettoyer et une bande de tissu ou de papier tendu et apte à défiler de façon intermittente entre l'extrémité de la machine et l'extrémité de la gaine à nettoyer. A cet effet, cette partie avant possède un embout profilé qui permet en pénétrant à l'intérieur du tube constituant la gaine d'un crayon de le maintenir dans l'axe de l'appareil. Conformément à l'invention, le nettoyage des surfaces interne et externe de l'extrémité du tube est réalisé par l'introduction d'une partie de la bande de tissu entre l'embout profilé et la gaine d'un crayon, puis par rotation de cette gaine autour de son axe à l'aide de moyens qui ne font pas partie de l'invention. Le nettoyage de la surface externe est obtenu par repliement latéral de la portion de bande de tissu située devant la machine sous l'effet d'un système de préhension constitué de quatre doigts basculant, mus par une came sous l'effet de la translation arrière de la tige rigide.

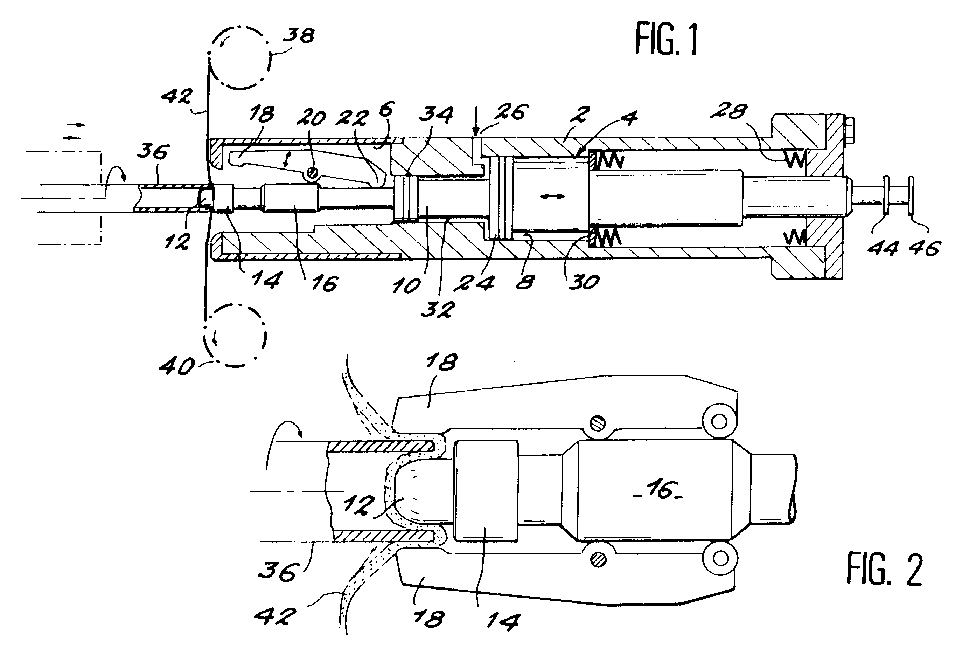

De toute façon, l'invention sera mieux comprise en se référant à la description qui suit d'un exemple de mise en oeuvre de l'appareil de nettoyage, objet de l'invention, exemple donné à titre surtout illustratif et non limitatif et fait en se référant aux figures 1 et 2 ci-jointes sur lesquelles :
- la figure 1 est une vue générale en coupe selon l'axe de l'appareil ;
- la figure 2 est une vue à plus grande échelle de l'extrémité avant de l'appareil, montrant le système de préhension refermé sur la bande de tissu.

Pour l'essentiel, l'appareil de nettoyage représenté sur la figure 1, se compose d'une pièce cylindrique allongée 2 percée de part en part selon son axe d'un conduit 4 dont le diamètre varie sur la longueur et qui s'élargit aux deux extrémités en formant deux chambres, à savoir respectivement : une chambre avant 6 et une chambre arrière 8. Une tige rigide 10 occupe ce conduit 4 sur toute sa longueur et comporte une partie avant et une partie arrière conçues de façon spécifique pour certaines particularités du fonctionnement de l'appareil.

L'extrémité avant de la tige rigide 10 située dans la chambre 6 comporte essentiellement un embout profilé 12 dont les dimensions radiales correspondent à son introduction dans l'extrémité interne d'une gaine compte tenu de l'épaisseur d'un tissu interposé devant la machine dont il sera parlé dans la suite. Cette extrémité avant de la tige 10 comporte également une butée cylindrique 14 dont le diamètre externe correspond au diamètre interne de la gaine à nettoyer de façon à former butée contre l'extrémité de celle-ci et à empêcher la progression plus avant de l'embout profilé 12. La partie de la tige 10 située dans la chambre 6 comporte encore une came 16 constituée par une surépaisseur diamétrale d'une portion de la tige 10. Cette came 16 est destinée à coopérer avec quatre doigts basculants situés à 90° les uns des autres autour de la tige 10 et dont l'un d'entre eux seul, référencé 18, a été représenté sur la figure. Ce doigt 18 comporte un axe 20 autour duquel il peut tourner et un galet arrière 22 permettant l'action de la came 16 pour provoquer son basculement autour de l'axe 20. Les quatre doigts basculant ainsi placés dans la chambre 6 constituent donc un système ou pince de préhension qui s'ouvre ou qui se ferme en fonction de l'état de translation de la tige 10 dans la chambre 6 sous l'effet de la came 16 que porte cette tige 10.

La partie arrière de la tige 10 comporte dans la chambre 8 une tête de piston 24 soumise à deux forces antagonistes : vers l'avant, la force due à l'introduction par le conduit 26 d'une pression gazeuse sur la face avant du piston 24 et à l'arrière du dispositif, l'action antagoniste d'un ressort 28 comprimé par l'intermédiaire d'une rondelle 30 dans la partie arrière de la chambre 8. Le piston 24 est prolongé vers l'avant par une partie cylindrique 32 de la tige 10 munie d'un joint d'étanchéité 34 permettant l'application de la pression sur la tête de piston 24 par l'intermédiaire de la canalisation 26.

Le fonctionnement de l'appareil qui vient d'être décrit est le suivant.

Une gaine de crayon 36 est amenée devant l'appareil en position de correspondance axiale avec la tige 10. Par ailleurs, une bande de tissu ou de papier de nettoyage apte à se dérouler à partir de deux magasins 38 et 40 devant l'extrémité avant de l'appareil de nettoyage est préalablement tendue entre celui-ci et la gaine 36. Le ressort 28 est détendu, la bande de papier ou de tissu 42 est maintenue droite entre l'embout profilé 12 et l'extrémité du tube à nettoyer 36. Les quatre doigts de serrage 18 sont dans la position écartée telle que représentée sur la figure 1.

A ce moment, le tube 36 est poussé par le dispositif de translation/rotation vers l'appareil de nettoyage et l'embout profilé 12 recouvert par la bande de tissu 42 pénètre dans l'extrémité de la gaine 36, en obligeant ainsi cette bande de tissu 42 à épouser la forme de l'embout profilé 12 en la coinçant entre l'intérieur du tube 36 et contre l'embout 14. La poussée en translation de la gaine 36 vers l'appareil de nettoyage se poursuit jusqu'à obtenir une compression du ressort 28 que l'on maintient dans cette position par une admission d'air comprimé par la canalisation 26 agissant sur la surface antérieure du piston 24.

On fait alors effectuer au tube 36 ou à l'appareil de nettoyage lui-même quelques mouvements rotatifs continus ou alternatifs de façon à nettoyer complètement l'extrémité et l'intérieur du tube. La gaine 36 est alors poussée jusqu'à sa fin de course repérée par le capteur 46 ce qui a pour effet de fermer les quatre doigts de préhension 18, de fixer la bande de tissu 42 contre la paroi externe de l'extrémité de la gaine 36. Pendant ce mouvement, la came 16 a fait basculer les quatre doigts 18 en plaçant la bande 42 dans la position repliée visible sur la figure 2. Les repères 44 et 46 situés à la partie arrière de la tige 10 permettent de contrôler avec exactitude le mouvement du crayon et la course qu'il impose à cette tige 10.

Le tube 36 recule ensuite lentement en décrivant un mouvement hélicoïdal de translation/rotation au cours duquel sa surface externe est nettoyée jusqu'à obtenir la libération complète de la gaine 36. La bande de nettoyage 42 est alors déplacée d'une certaine longueur avant le nettoyage de la gaine suivante.

Comme on le voit le fonctionnement de l'appareil se déroule en deux parties, à savoir une première partie au cours de laquelle on nettoie la face et la surface interne de la gaine d'un crayon et une deuxième partie, au cours de laquelle on nettoie la surface extérieure de cette même gaine.

Cet appareil de nettoyage résoud parfaitement les problèmes posés jusqu'à ce jour dans la technique de fabrication des crayons combustibles tout en ayant un fonctionnement simple et automatique.

## Revendications

1. Appareil de nettoyage de l'extrémité de la gaine d'un crayon combustible 36 de réacteur nucléaire, ledit crayon 36 étant monté de façon à pouvoir se déplacer en translation et/ou en rotation selon/autour de son axe, caractérisé en ce qu'il comprend :
- une pièce cylindrique allongée 2 percée de part en part selon son axe d'un conduit 4 de diamètre variable sur sa longueur s'élargissant aux deux extrémités en forme de chambres 6, 8 ;
- une tige rigide 10 occupant le conduit 4, terminée à son extrémité avant par une butée cylindrique 14 ayant le diamètre externe de la gaine à nettoyer, prolongée par un embout profilé 12 de dimensions radiales lui permettant de pénétrer dans l'extrémité interne de la gaine, ladite tige rigide 10 formant :
a) dans la chambre arrière 8, un piston 24 apte à déplacer l'ensemble de la tige rigide, vers l'avant ou vers l'arrière, sous les effets antagonistes d'un ressort 28 et d'une pression de fluide appliquée depuis l'extérieur de la pièce cylindrique sur la tête du piston 24, et
b) dans la chambre avant 6, un système de préhension d'une bande de tissu (42) tendue et apte à défiler devant la machine entre celle-ci et l'extrémité de la gaine à nettoyer, composé de quatre doigts basculant 18 chacun autour d'un axe et mus par une came 16 en forme de surépaisseur diamétrale située sur la portion de la tige rigide 10 située dans la chambre avant 6.

## Patentansprüche

1. Apparat zur Reinigung des Endes der Hülse eines Kernreaktorbrennstabs (36), wobei besagter Brennstab (36) so angebracht wird, daß er Längsbewegungen ausführen kann und/oder Drehbewegungen um/entsprechend seine/r Achse,
**dadurch gekennzeichnet**, daß er umfaßt:
- ein längliches zylindrisches Teil (2), seiner Achse entsprechend durchbohrt von einer Leitung (4) mit variablem Durchmesser über ihre Länge, die sich an den beiden Enden erweitert in Form von Kammern (6, 8);
- eine steife, in der Leitung (4) sitzende Stange (10), die an ihrem vorderen Ende abschließt durch einen zylindrischen Anschlag (14), der den Außendurchmesser der zu reinigenden Hülse aufweist, verlängert durch einen profilierten Ansatz (12) mit Radialabmessungen, die ihm ermöglichen, in das Innenende der Hülse einzudringen, wobei besagte steife Stange (10) bildet:
a) in der hinteren Kammer (8) einen Kolben (24) zum Verschieben der gesamten steifen Stange nach vorn oder nach hinten unter den gegensätzlich wirkenden Kräften einer Feder (28) und eines von außerhalb des zylindrischen Teils auf den Kopf des Kolbens (24) ausgeübten Fluiddrucks, und
b) in der vorderen Kammer (6) ein Greifsystem eines Gewebestreifens (42), gespannt und imstande, vor der Vorrichtung durchzulaufen, zwischen dieser und dem Ende der zu reinigenden Hülse, gebildet durch vier um eine Achse schwenkbare Finger (18), bewegt durch eine Nocke (16) in Form einer diametralen überdicke, an dem Teil der steifen Stange (10) vorgesehen, der sich in der vorderen Kammer (6) befindet.

## Claims

1. Apparatus for cleaning the end of the cladding of a nuclear reactor fuel rod 36, the said rod 36 being mounted so as to be capable of being moved in translation and/or in rotation along/about its axis, characterized in that it comprises:
- an elongate cylindrical part 2 pierced fully through along its axis with a duct 4 of variable diameter over its length, widening at the two ends in the form of chambers 6, 8;
- a rigid spindle 10 occupying the duct 4 and ending at its front end in a cylindrical stop 14 having the external diameter of the cladding to be cleaned, extended by a profiled end-piece 12 having radial dimensions allowing it to penetrate into the inner end of the cladding, the said rigid spindle 10 forming:
a) in the rear chamber 8, a piston 24 capable of moving the entire rigid spindle forwards or backwards under the antagonistic effects of a spring 28 and of a fluid pressure applied from outside the cylindrical part onto the head of the piston 24, and
b) in the front chamber 6, a gripping system for a band of fabric 42 which is stretched and capable of moving in front of the machine, between the latter and the end of the cladding to be cleaned, which system is composed of four fingers 18, each tilting about a pin and actuated by a cam 16 in the form of a diametral overthickness located on the portion of the rigid spindle 10 located in the front chamber 6.
